# EUROPÄISCHE PATENTSCHRIFT

(11) **EP 2 764 031 B1**
(45) Veröffentlichungstag und Bekanntmachung des Hinweises auf die Patenterteilung: **04.03.2020**
(21) Anmeldenummer: 12766417.5
(22) Anmeldetag: 20.09.2012
(51) Int. Cl.: C08G 18/62, C08G 18/72, C08G 18/78, C08G 18/79, C09D 175/04, C04B 41/48, C04B 41/71, C08K 3/34, C08L 75/04, C09D 7/65, C08K 5/00, C04B 41/63, C04B 41/00

(54) **2-KOMPONENTEN POLYURETHAN-BESCHICHTUNG AUF FASERZEMENT**
2-COMPONENT POLYURETHANE COATING ON FIBER CEMENT
REVÊTEMENT POLYURÉTHANE À DEUX COMPOSANTS SUR FIBROCIMENT

(30) Priorität: 06.10.2011 CH 16342011
(43) Veröffentlichungstag der Anmeldung: 13.08.2014
(73) Patentinhaber: Swisspearl Group AG, 8867 Niederurnen (CH)
(72) Erfinder: HÄMMERLI, Mathias, 8867 Niederurnen (CH); SZEGEDY, Paul, 8020 Wädenswil (CH); TRABESINGER, Gerald, 8722 Kaltbrunn (CH); BÖSCH, Klemens, 8864 Reichenburg (CH)
(74) Vertreter: Troesch Scheidegger Werner AG
(86) Internationale Anmeldenummer: PCT/EP2012/068549
(87) Internationale Veröffentlichungsnummer: WO 2013/050253

(56) Entgegenhaltungen:
- EP-A1- 1 834 995
- EP-A1- 2 236 531
- DE-A1-102007 059 090

## Beschreibung

Die vorliegende Erfindung betrifft eine Zusammensetzung für eine Beschichtung für einen mindestens teilweise aus mineralischen Materialien bestehenden Untergrund, gemäss dem Oberbegriff nach Anspruch 1.

Im Speziellen betrifft die vorliegende Erfindung die Formulierung und Applikation einer wetterbeständigen Beschichtung für Faserzementartikel. Speziell handelt es sich um eine 2-komponentige Polyurethan-Beschichtung auf wässriger Basis, folgend 2K-PUR genannt, welche an einer industriellen Linie auf beispielsweise einer Faserzementplatte appliziert und durchgehärtet wird. Für den Einsatz einer derart beschichteten Faserzementplatte ist eine extrem wetterbeständige Beschichtung notwendig. Insbesondere muss die Beschichtung gegenüber UV-Einstrahlung, Hitze, Frost-/Tauzyklen und Wasser- und Feuchtigkeitseinflüssen eine sehr hohe Langzeitbeständigkeit aufweisen. Des Weiteren muss die Beschichtung der hohen Alkalinität des Faserzementes gewachsen sein und dessen Neigung zu Kalkausblühungen unterdrücken. Ausserdem muss die Beschichtung den ästhetischen Ansprüchen der Kunden genügen, indem sie möglichst matt ist und gleichzeitig eine hohe Transparenz aufweist, so dass der vom Kunden geschätzte Faserzement-Aspekt auf der Oberfläche gut sichtbar ist.

Die üblicherweise auf einer Faserzementplatte applizierte Acrylat-Beschichtung weist, unabhängig ob sie vorgängig mittels einer Grundierung, meist ebenfalls auf Acrylatbasis und/oder Hydrophobierung, z.B. durch hydrophobierende Silane oder Siloxane oder Mischungen derselben, vorbehandelt wurde, einige Nachteile auf. Einer der Nachteile ist, dass die Acrylatbeschichtung thermoplastisch ist, was bedeutet, dass sie unter Temperatureinwirkung weich wird. Dies kann in einem Stapel von Faserzementplatten unter Temperatureinwirkung (z.B. an einer Baustelle bei intensiver Sonneneinstrahlung oder beim Transport in heisse Länder) zu Verblockungen zwischen den einzelnen Platten führen. Wenn gegen die Verblockung Folieneinlagen zwischen den einzelnen Platten eingezogen wurden, kann es passieren, dass sich das Muster der Folie in der Beschichtung abzeichnet.

Auch leidet die Acrylat-Beschichtung unter mangelnder mechanischer Festigkeit wie etwa mangelnde Kratzfestigkeit, was die Verarbeitung am Bau erschwert. Ein weiterer Nachteil ist, dass die Beschichtung nicht Antigraffiti-tauglich ist. Sprays und Tinten lassen sich nach einer Graffitiattacke nicht mehr entfernen, da oftmals eine Reinigung mit Lösemittel notwendig wäre, was auf einer herkömmlichen Beschichtung nicht möglich ist. Eine beispielsweise thermoplastische Beschichtung würde durch die Lösemittel selbst mitaufgelöst werden.

EP 0 192 627 B1 beschreibt eine 2-komponentige Polyurethan-Beschichtung für Baumaterialien, unter anderem auch für Asbestzement. Jedoch ist diese Polyurethan-Beschichtung auf Basis von Lösemittel und daher ökologisch bedenklich und an einer industriellen Beschichtungslinie nur mit grossem Schutzaufwand gegen Explosion zu verarbeiten. Insbesondere die Trocknung bei erhöhten Temperaturen ist mit einem lösemittelhaltigen Beschichtungssystem nur sehr schwer durchzuführen. Die Trocknung bei erhöhten Temperaturen ist jedoch für die Wetter- und Graffitibeständigkeit absolut notwendig, da bei Raumtemperatur oder tieferen Temperaturen die Vernetzungsreaktion der beiden Komponenten nur unvollständig ablaufen kann. Die Konsequenz ist mangelhafte Wetter- und Graffitibeständigkeit wie nachfolgend in Tabelle 3 dargestellt. Auch die Gesetzgebung der Schweiz (VOC-Lenkungsabgabe) und der EU gehen in die Richtung, dass der grossindustrielle Einsatz von Lösemittel künftig nicht oder nur noch reduziert möglich ist.

EP 1 914 215 beschreibt eine UV-härtbare Beschichtung mit Isocyanat-enthaltender Gruppe auf einer farbgebenden Acrylat-Beschichtung. Der Nachteil dieser Erfindung besteht darin, dass der vom Kunden erwünschte Mattierungsgrad nur sehr aufwändig mittels Aufbringen einer strukturierten Polypropylen-Folie zu erreichen ist. Ausserdem muss auf eine bereits mit einer Acrylat-Beschichtung versehenen Faserzementplatte die im Patent beschriebene zusätzliche UV-härtbare Beschichtung aufgebracht werden. Diese beiden Punkte, die aufwändige Mattierung und die zusätzlich aufzubringende UV-härtbare Beschichtung, verteuern aber das Produkt.

US 5'308'912 und EP 0'542'085 beschreiben eine wässrige 2K-PUR Formulierung für Holz und andere Untergründe, u.a. auch für einen mineralischen Untergrund. Insbesondere wird die Zugabe eines Polyetherpolyols zwecks Erhöhung des Glanzgrades beansprucht.

Einer der Nachteile dieser beiden Patente ist jedoch, dass der von Kunden gewünschte möglichst tiefe Glanzgrad für Beschichtungen auf Faserzement auf diese Weise nicht erreicht wird.

Ein weiterer Nachteil der beiden genannten Patente ist es, dass es für die geforderte sehr hohe Wetterbeständigkeit einer 2K-PUR Beschichtung auf Faserzement nicht ausreicht, nur ein Polyacrylatpolyol/Polyisocyanat-Bindemittelsystem auszuwählen.

Patent DE 102007059090 A1 beschreibt eine Polymermischung, wobei auch eine Polyacrylatpolyol/Polyisocyanat-Mischung erwähnt wird, für Dekoroberflächen im Automobilinnenraum. Als Mattierungsmittel wird eine Polyurethan-Dispersion vorgeschlagen.

Ein Nachteil dieser Erfindung ist, dass mit der allgemein beschriebenen Polyacrylatpolyol/Polyisocyanat-Mischung nicht die den Kundenanforderung entspechende Langzeit-Wetterbeständigkeit auf dem hochalkalischen Faserzement für den Einsatz im Aussenbereich erreicht werden kann.

WO97/45475 beschreibt ebenfalls eine 2-komponentige Polyurethan Formulierung auf wässriger Basis und mit hohem Glanzgrad, welche nebst anderen Untergründen auch auf mineralischen Untergründen einsetzbar ist. Auch in diesem Patent werden in einer unspezifischen Aufzählung ein Polyacrylat und ein Styrolacrylat als mögliche Bindemittel erwähnt.

Die Nachteile dieser Formulierung sind die gleichen wie bei US 5'308'912 und EP 0542085: die Beschichtung hat einen vom Kunden nicht erwünschten hohen Glanzgrad. Die sehr gute Langzeit-Beständigkeit mit den geeigneten Bindemittel- und Härter-Kombination zusammen mit den geeigneten Füllstoffen und UV-Absorber ist im Patent WO97/45475 nicht Gegenstand der Erfindung. So wird ein hydrophober Polyisocyanat-Härter auf Seite 2, Zeile 17-21, sogar als ungeeignet betrachtet, da er sich schwer in das wässrige System einbringen lasse.

Es ist eine Aufgabe der vorliegenden Erfindung die auf Faserzementplatten übliche Acrylat-Beschichtung durch eine 2-Komponenten-Beschichtung zu ersetzen, welche die oben genannten Nachteile überwindet.

Verallgemeinert besteht die Aufgabe der vorliegenden Erfindung also darin, eine Zusammensetzung für die Beschichtung von einem mindestens teilweise aus mineralischen Materialien bestehenden Untergrund vorzuschlagen, welche alle die erwähnten Nachteile nicht aufweist, wie beispielsweise einer 2-Komponenten-Polyurethan-Beschichtung welche block- und kratzfest ist, Antigraffiti-tauglich und alle Anforderungen einer wetterbeständigen Beschichtung für mineralische Untergründe wie insbesondere Faserzementplatten erfüllt. Die Aufgabe besteht auch darin, eine einwandfreie Haftung und keine oder sehr geringe optische Veränderungen unter UV-Lichteinwirkung, Frost-/Tauzyklen, Warmwasser und Feuchtigkeitseinwirkung sowie Eindringen von Wasser über die Kanten zu ermöglichen.

Erfindungsgemäss werden die erwähnten Aufgaben mittels einer Zusammensetzung für die Beschichtung von einem mindestens teilweise aus mineralischen Materialien bestehenden Untergrund gemäss dem Wortlaut nach Anspruch 1 gelöst.

So weist die erfindungsgemässe Formulierung sowohl eine hohe Wetterbeständigkeit auf dem alkalischen Faserzement auf und erfüllt gleichzeitig auch die hohen Kundenanforderung bezüglich ästhetischem Erscheinungsbild.

So ist die erfindungsgemässe Beschichtung sehr matt bei gleichzeitig sehr hoher Transparenz, so dass das charakteristische Faserbild der Faserzementplatte optimal zur Geltung kommt.

Vorgeschlagen wird, dass die Zusammensetzung mindestens eine mindestens 2-Komponenten aufweisende Formulierung enthält, wobei die erste Komponente auf Basis mindestens eines OH-funktionalisierten Bindemittels besteht, die mindestens ein Polyacrylat mit einem Styrolgehalt ≤ 30% sowie die 2. Komponente mindestens ein aliphatisches Isocyanat enthält oder ein Polymer davon, wobei ein Härter hydrophil und ein weiterer Härter hydrophob ist und dass weiter die Formulierung mindestens zwei Füllstoffe auf Basis von Polyurethan und/oder Polymethylmethacrylat enthält. Bei der ersten Komponente kann es sich um eine Dispersion einer der in der nachfolgenden Liste aufgeführten Polymere handeln wie Polyacrylat, Styrolacrylat und/oder Mischungen davon.

Gemäss einer Ausführungsvariante sind Abmischungen von Polyacrylate vorgesehen, wobei eine Bindemittelkomponente einen Styrolgehalt ≤ 30%, eine weitere Bindemittelkomponente einen Styrolgehalt ≤ 5% aufweist und/oder eine wiederum weitere Komponente ein OH-funktionalisiertes Reinacrylat ist.

Gemäss einem Bespiel funktioniert die vorliegende Erfindung mit OH-Gehältern von 0,5% bis 20%, bevorzugt 1% bis 10%. Somit kann beispielsweise ein erstes Polyacrylat eine OH-Zahl von 2% aufweisen und die einer weiteren Bindemittelkomponente beispielsweise 5,0%.

Die Beschichtungszusammensetzung gemäss der vorliegenden Erfindung kann nebst der ersten Komponente bzw. dem Bindemittel Pigmente und weitere Rohstoffe und Hilfsstoffe enthalten, wie Füllstoffe, Netz- und Dispergieradditive, Emulgatoren, Rheologie-Additive, Benetzungs- und Verlaufsadditive, Entschäumer, Topf- und Filmkonservierer, Wachsdispersionen, Hydrophobierungsmittel, Biocide, UV-Schutzmittel, Fasern, Lösemittel, Filmbildehilfsmittel und andere Rohstoffe.

Es ist auch Gegenstand der vorliegenden Erfindung, dass geeignete organische Füllstoffe, wie z.B. Füllstoffe auf Basis von Polyurethan oder Polyacrylat zugesetzt werden, entweder alleine oder in Kombination mit anorganischen Füllstoffen. In den beiden Patenten US 5 308 912 und EP 0 542 085 werden beispielsweise keinerlei Füllstoffe erwähnt. Formulierung 1 und 2 gemäss nachfolgender Tabelle 2 sind Formulierungen auf Basis eines üblichen anorganischen Füllstoffes. Diese Formulierungen zeigen jedoch nebst einem zu hohem Glanzgrad in den Alterungstests auch unakzeptable Blasenbildung und starke Aufhellung der Beschichtung im Feuchtigkeitstest. Auch nach den UV/Feuchtigkeits-Belastungszyklen im QUV-Test findet eine unakzeptabel hohe Aufhellung der Beschichtung statt.

Ein weiterer Anspruch der vorliegenden Erfindung ist der Einsatz eines UV-Absorbers auf Basis eines Triazin-Types. Dies wird in den beiden erwähnten Patenten nur sehr oberflächlich als "additives conventionally used" erwähnt.

Auch im Patent EP 0 192 627 B1 wird kein Bezug auf die erfindungsgemässen organischen Füllstoffe genommen. So wird in Kolonne 3, Zeile 54 ein Mattierungsmittel auf Basis von Kieselsäure (Si02) oder Magnesiummetasilikat vorgeschlagen. Ersteres Mattierungsmittel hat sich jedoch als schädlich für die Langzeit-Beständigkeit erwiesen und zweiteres führt zu einer Eintrübung der Beschichtung, so dass das gewünschte Faserbild der Platte schlecht oder sogar gar nicht mehr sichtbar ist.

Ausserdem wird in Kolonne 4, Zeile 37-43 für die Erreichung des tiefen Glanzgrades vorgeschlagen, einfach die Zugabe der Härtermenge (Komponente B) zu Komponente A zu reduzieren. So kann jedoch nicht der tiefe Glanzgrad erreicht werden, der den heutigen Kundenanforderungen entspricht.

Als Füllstoffe geeignet sind beispielsweise solche auf organischer Basis, wie beispielsweise Füllstoffe auf Basis von Polymethylmethacrylat oder Polyurethan, welche selbstverständlich zwecks besserer Beständigkeit auch modifiziert sein können. Gemäss einer Ausführungsvariante wird vorgeschlagen, dass mehrere Füllstoffe miteinander abgemischt werden, beispielsweise aufweisend unterschiedliche Korngrössen, wie in einem Bereich von 0,1 bis 100µm, bevorzugt zwischen 1µm und 75µm. Gemäss einer Ausführungsvariante wird vorgeschlagen, eine Mischung von 60% bis 95% mit Korngrösse < 28µm zu verwenden sowie der Rest mit einer Korngrösse im Bereich von 28µm bis 40µm. Selbstverständlich können auch grössere Korngrössen Verwendung finden, wobei Korngrösse < 75µm weniger als 1% betragen. Dies ist lediglich ein Beispiel und andere Abmischungen sind selbstverständlich möglich.

Weitere mögliche Füllstoffe sind anorganische Füllstoffe wie zum Beispiel Silikate, Karbonate, Aluminosilikate wie zum Beispiel Dolomit, Talk, Calcit, usw. Auch Abmischungen zwischen anorganischen und organischen Füllstoffen sind möglich.

Typische Pigmente sind Metalloxide, wie zum Beispiel Titandioxide, Eisenoxide, Spinellpigmente, Titanate oder andere sowie auch organische Pigmente, wie zum Beispiel Phtalocyanine.

Geeignete UV-Absorber umfassend die typischen Substanzklassen wie Oxalanilide, Triazine, Triazole, Benztriazole und/oder Benzophenone und/oder anorganische UV-Absorber wie z.B. auf Basis von transparenten, modifizierten Titandioxid, Zinkoxid, Ceroxid oder dergleichen. Diese UV-Absorberklasse wird idealerweise ergänzt durch Radikalfänger, zum Beispiel der Substanzklasse der sterisch gehinderten Amine (HALS Verbindungen). Eingesetzt werden können die reinen Wirkstoffe sowie in Form von wässrigen Dispersionen oder Emulsionen, wie sie beispielsweise von Ciba als Tinuvintyp angeboten wird. Geeignete Zusatzmengen für UV-Absorber und Radikalfänger befinden sich im Bereich von 0.1 bis 5 Gewichtsprozent, am geeignetsten ist der Bereich von 0.1 bis 2 Gewichtsprozent bezogen auf die reine Wirkstoffmenge.

Gemäss einer weiteren Ausführungsvariante wird vorgeschlagen, dass die Formulierung als zweite Komponente eine Härterkomponente enthält, aufweisend einzeln oder als Mischung verschiedener Oligomere/Polymere von aliphatischen Isocyanaten, wie z.B. Hexamethylendiisocyanaten oder Isophorondiisocyanat, beliebige Polyisocyanate mit aliphatisch, cycloaliphatisch, araliphatisch gebundenen, freien Isocyanat-Gruppen, welche gegebenenfalls mittels Ethylenoxid und/oder Propylenoxid modifiziert sind.

Die erfindungsgemässe Formulierung wurde für mineralische Untergründe, insbesondere für Faserzement, entwickelt. Dazu muss die Beschichtung bei einem hochalkalischen pH-Wert von bis zu 14 bei einer frisch hergestellten Faserzementplatte beständig sein, was auf Dekorflächen im Automobilinnenraum nicht der Fall ist, wie es beispielsweise Patent DE102007059090 beschreibt. Zusätzlich muss es die Neigung von Faserzement zu Kalkausblühungen unterdrücken und bei allen Wettereinflüssen, insbesondere der UV-Belastung, den Frost/Tauzyklen und der Feuchtigkeitseinwirkung, sehr langzeitbeständig sein. Nicht mit jeder Polymer/Polyisocyanat-Mischung wird dies aber erreicht.

Diese Anforderungen werden erfüllt, indem bspw. eine Mischung von Polyacrylatpolyolen eingesetzt wird, wovon eines der Polyacrylatpolyolen einen maximalen Styrolgehalt von 30% aufweist und das zweitere einen wesentlich geringeren von ca. 5% oder weniger. Dadurch erreicht man die notwendige Hydrophobie des 2K-PUR Filmes, welche in Folge zur ausgezeichneten Wetterbeständigkeit führt (siehe nachfolgende Tab. 2). Gleichzeitig vermeidet man durch Abmischung mit dem zweiten Bindemittel eine Vergilbung unter Einfluss des Sonnenlichtes, was sonst bei unsachgemässem Einsatz von Styrolacrylaten passieren kann. Auch auf der Härterseite wird bspw. eine Kombination eines eher hydrophileren mit einem hydrophoben Härter eingesetzt, um die hohe Beständigkeit zu erreichen. Beides, die Mischung zweier geeigneter Polyacrylatpolyolen, wie auch die Mischung zweier geeigneter Polyisocyanat-Härter ist jedoch nicht Gegenstand der Erfindung des Patentes DE 102007059090 A1. Zudem sollten die Teilchengrössen der eingesetzten Polyurethan- und/oder Polyacrylat-Füllstoffe wohl ausgewogen sein, um gleichzeitig den tiefen Glanzgrad und die hohe Transparenz nebst der hohen Wetterbeständigkeit zu erreichen. Ebenfalls nicht Gegenstand der Erfindung in Patent DE 102007059090 A1 ist es, dass die 2K-PUR Beschichtung nach Applikation eine Temperaturbehandlung von bspw. mind. 20 Minuten bei 50 - 110°C vorteilhaft ist, wie bei 100 bis 140 Minuten bei 65°C bis 90°C. Erst durch eine Temperaturbehandlung findet die vollständige Reaktion der OH-funktionalisierten Acrylatpolymere mit der Isocyanat-Komponente statt, was in Folge erst zu einer deutlich besseren Wetter- und Graffiti-Beständigkeit führt (siehe nachfolgende Tab. 3).

Auch weitere Modifikationen sind möglich, wie zum Beispiel der Einbau von funktionellen Gruppen, wie zum Beispiel 3-(Cyclohexylamino)-1-propan-sulfonsäure oder andere Gruppen. Härter dieser Art sind bestens bekannt als sogenannte Desmodur- oder Bayhydurtypen der Firma Bayer oder Basonat-Typen der Firma BASF. Bevorzugt wird eine Mischung von Härtern eingesetzt, wobei ein Härter eher hydrophil ist und für eine gleichmässige Durchhärtung sorgt und der zweite Härter hydrophob ist und somit für eine verbesserte Hydrophobie und damit Wetterbeständigkeit des Films sorgt. Der bevorzugte Isocyanatgehalt der Härtermischung liegt zwischen 10% und 40%, bevorzugter 15% bis 25%. Idealerweise werden die beiden Härter in einem isocyanattauglichen Lösemittel verdünnt, um die Viskosität an die Viskosität der Bindemittel-Komponente A anzupassen und damit besser mischbar zu machen. Isocyanattaugliche Lösemittel sind Lösemittel welche nicht mit den Isocyanatgruppen des Härters reagieren. Das heisst, die Lösemittel enthalten keine Hydroxy-, Amino-, Thiol- und Säuregruppen oder andere isocyanatreaktive Gruppen. Selbstverständlich können die Anteile der einzelnen Härter und des Lösungsmittels im gesamten Bereich von 0%-100% variiert werden und einzelne Härter auch weggelassen oder neue Härter hinzugenommen werden. Ebenfalls kann das Lösemittel im Anteil variiert werden und grundsätzlich gegen jedes Isocyanat-kompatibles Lösemittel ersetzt werden. Eine beispielsweise geeignete Härtermischung besteht aus ca. 40% Teilen des hydrophoben Härters Desmodur N-3600 (Firma Bayer) und ca. 40% des hydrophileren Härters Bayhydur 304 (Firma Bayer) verdünnt mit ca. 20% Teilen des Lösemittels Jeffsol PC (Propylencarbonat, Hersteller: Huntsman).

Gemäss einer weiteren Ausführungsvariante der vorliegenden Erfindung wird vorgeschlagen, dass die Komponenten der Formulierung beispielsweise derart gemischt werden, dass die Isocyanat-Konzentration der Härterkomponente, bezeichnet als Komponente B, zur Hydroxy-Konzentration der ersten Komponente, bezeichnet als Komponente A, im molaren Verhältnis von [NCO] : [OH] = 1 : 1 bis 5 : 1, wie beispielsweise 1,5 : 1 liegt. Gewichts- und volumenmässig kann sich das Mischverhältnis zwischen den Komponenten A und B zwischen A : B = 0,1 : 1 bis 10 : 1 bewegen. Gemäss einem speziellen Ausführungsbeispiel liegt das Mischverhältnis bei A zu B von 4 : 1 bis 8 : 1, bevorzugt beispielsweise bei 6 : 1. Das Gemisch kann zwecks besseren Verlaufs zusätzlich mit Wasser oder anderen Lösemittel verdünnt werden. Beispielsweise Zusatzmengen bewegen sich im Verhältnis von 0 bis 100 Gewichtsprozent, im Verhältnis zum Gemisch der beiden Komponenten A und B. Geeignet ist beispielsweise eine Zugabe von Wasser im Bereich von 10 bis 50 Gewichtsprozent, wie beispielsweise wird eine Zugabe von Wasser von 25 Gewichtsprozent vorgeschlagen.

Gemäss der vorliegenden Erfindung wird weiter vorgeschlagen, die beiden vorab beschriebenen Komponenten der Formulierung bzw. der Beschichtungszusammensetzung über separate Behälter mittels einer Misch- und Dosieranlage in einem Verhältnis wie vorab beschrieben zu dosieren und über geeignete Mischer homogen zu vermischen. Geeignete Auftragsmengen als Nassfilm betragen 50 bis 500 g/m2, wie beispielsweise 100 bis 250 g/m2. Die Trockenschichtstärke kann zwischen 10 und 100µm wie beispielsweise zwischen 30 und 80µm betragen.

Mit einer geeigneten Formulierung und einer geeigneten Misch- und Dosieranlage ist es möglich einen niedrigen Glanzgrad zu erreichen und gerade das Einbringen des hydrophoben Polyisocyanat-Härters ist ein Beitrag zur Langzeit-Beständigkeit der vorliegenden Erfindung. So erhöht der hydrophobe Polyisocyanat-Härter die Alterungsbeständigkeit, wie der Vergleich der Formulierung 1 und 2 in Tabelle 2 (= ohne hydrophoben Polyisocyanat-Härter) mit den Formulierungen 3 und 4 (= mit hydrophoben Polyisocyanat-Härter) zeigt. Die Beschichtung bildet keine Blasen mehr, es gibt keine Verfärbungen, z.B. durch Aufhellung, und die UV-Beständigkeit verbessert sich entscheidend.

Nach Applikation der beiden Komponenten der Beschichtungszusammensetzung auf der Faserzementplatte mit beispielsweise einer Oberflächentemperatur von 25°C bis 80°C und, wie beispielsweise der 2K-PUR Beschichtung, auf beispielsweise eine grundierte oder nicht grundierte Faserzementplatte, wird die Beschichtung anschliessend mittels eines Trockners von beispielsweise 10 Minuten bis 10 Stunden in über 100 Minuten bei 20°C bis 120°C wie bei 80°C durchreagiert. Die Vernetzungsreaktion zwischen den beiden Komponenten A und B ist dann abgeschlossen, wie Abbildung 1 mit dem Spektrum B zeigt. Die vollständige Vernetzungsreaktion ist eine Voraussetzung für eine sehr gute Wetter- und Graffiti-Beständigkeit, wie es Tabelle 3 zeigt.Die 2K-PUR Beschichtung kann mittels Pigmenten in beliebigen Farbtönen eingefärbt werden, sei es deckend, transparent oder halbtransparent. Die Formulierung und die entsprechende Applikation führen zu einer Beschichtung, welche sehr wetterbeständig ist bezüglich Farbtonhaltung, Aspekt der Oberfläche (keine oder geringe Veränderung der Beschichtung) und Haftung und den hohen ästhetischen Ansprüchen der Kunden, wie tiefer Glanzgrad und gleichmässiges Erscheinungsbild, entspricht.

### Beispiele:

Nachfolgend werden zwei beispielsweise Rezepturen angeführt, welche je eine Beschichtungszusammensetzung gemäss der vorliegenden Erfindung aufweisen:

**Rezeptur 1: Formulierung der 2K-PUR Lasur**

| Rohstoff | Menge | %-Anteil |
|---|---|---|
| (Komponente A): | | |
| Bayhydrol XP-2695 | 300gr. | 32.38% |
| Bayhydrol XP-2427 | 130gr. | 14.031% |
| Decosoft 18, transparent | 50gr. | 5.397% |
| Decosoft 15, transparent | 50gr. | 5.397% |
| Tinuvin 123-DW | 18gr. | 1.943% |
| Tinuvin 400-DW | 53gr. | 5.720% |
| Wasser | 190gr. | 20.5% |
| Div. Additive, Füllstoffe, mit oder ohne Pigmente | 135,5gr. | 14.625% |
| TOTAL | 926,5gr. | 100% |
| | | |
| Härter Komponente B | | |
| Desmodur N 3600 | 50gr. | 40% |
| Bayhydur 304 | 50gr. | 40% |
| Propylencarbonat | 25gr. | 20% |
| TOTAL | 125gr. | 100% |

### Herstellung von Komponente A:

Additive wie Netzmittel, Entschäumer, Fungizide, Algizide werden in das vorgelegte Wasser gemischt und mit den beiden Füllstoffen Decosoft 15 und Decosoft 18 unter starkem Rühren dispergiert bis eine Temperatur von ca. 60°C erreicht wird.

Anschliessend werden unter ständigem Rühren und weiterer Zugabe von Wasser die beiden Bayhydrol Bindemittel-Komponenten zugegeben, zusammen mit Tinuvin 123-DW und Tinuvin 400-DW. Das Verfilmungsmittel Butylglycol wird langsam hinzugetropft und abschliessend wird Wasser hinzugefügt, um die gewünschte Viskosität einzustellen.

### Herstellung der Härter-Komponente B:

Die beiden Härter Desmodur N3600 und Bayhydur 304 werden unter Inertatmosphäre in Propylencarbonat gelöst und luftdicht verschlossen.

### Verarbeitung der beiden Komponenten A und B:

Die beiden Komponenten werden mit 2K-Misch- und Dosieranlage verarbeitet, wobei Komponenten A und B im Verhältnis von 6 : 1 gemischt werden. Zur Herstellung einer adäquaten Spritzviskosität zwecks schönem Verlauf wird die Mischung von A und B mit 25% Wasser verdünnt.

**Rezeptur 2: 2K-PUR Mischfarbe mit Pigmenten:**

| Rohstoff | Menge | %-Anteil |
|---|---|---|
| Komponente A: | | |
| Bayhydrol XP-2695 | 130gr. | 29.160% |
| Bayhydrol XP-2427 | 300gr. | 12.636% |
| Decosoft 18, transparent | 50gr. | 4.860% |
| Decosoft 15, transparent | 50gr. | 4.860% |
| Tinuvin 123-DW | 18gr. | 1.750% |
| Tinuvin 400-DW | 53gr. | 5.152% |
| Wasser | 190gr. | 18.468% |
| Div. Additive, Füllstoffe, Pigmente | 237,8gr. | 23.114%% |
| TOTAL | 102,8gr. | 100% |

### Komponente B analog Rezeptur 1.

### Herstellung Komponente A Bindemittel:

Additive wie Netzmittel, Entschäumer, Fungizide, Algizide werden in das vorgelegte Wasser gemischt und mit den beiden Füllstoffen Decosoft 15 und Decosoft 18 unter starkem Rühren dispergiert bis eine Temperatur von ca. 60°C erreicht wird.

Anschliessend werden unter ständigem Rühren und weiterer Zugabe von Wasser die beiden Bayhydrol Bindemittel-Komponenten zugegeben, zusammen mit Tinuvin 123-DW und Tinuvin 400-DW. Das Verfilmungsmittel Butylglycol wird langsam hinzugetropft und abschliessend wird Wasser hinzugefügt, um die gewünschte Viskosität einzustellen.

Die Verarbeitung in Produktion erfolgt analog Rezeptur 1, wobei das Mischverhältnis von Komponente A zu Komponente B wiederum mit 6 : 1 gewählt wird. Wiederum erfolgt eine 25%-ige Verdünnung mit Wasser.

### Legende:

Bayhydrol-Bindemittel der Firma BAYER, Leverkusen, Deutschland:
- Bayhydrol XP-2695 Acrylatbindemittel
- Bayhydrol XP-2427 hydrophobes Styrolacrylat-Bindemittel Desmodur-Härter der Firma BAYER, Leverkusen, Deutschland:
- Desmodur N 3600 aliphatischer Isocyanat-Härter auf Basis Hexametylendiisocyanat, hydrophob Bayhydur-Härter der Firma BAYER, Leverkusen, Deutschland:
- Bayhydur 304 aliphatischer Isocyanat-Härter auf Basis Polyether Allophanat modifiziertem Hexametylendiisocyanat

Decosoft Polyurethan-Füllstoffe der Firma Microchem, Erlenbach, Schweiz:
- Decosoft 15 transparent mit mittlerer Teilchengrösse 15 µm.
- Decosoft 18, transparent mit mittlerer Teilchengrösse von 18 µm

Tinuvin Additive der Firma Ciba Spezialitäten AG, Basel,Schweiz:
- Tinuvin 123-DW: Radikalfänger
- Tinuvin 400-DW: UV-Absorber auf Basis von N-OR Typ Triazin.

Insbesondere die Verwendung organischer Füllstoffe wie insbesondere der in den beiden Rezepturen 1 und 2 angegebenen Kombination von Decosoft 15 und Decosoft 18, führt zu einer matten Beschichtung bei gleichzeitig hoher Transparenz und guter Verarbeitbarkeit an der Beschichtungslinie.

Zusätzlich führt die Kombination der beiden Bayhydrol Bindemittel-Komponenten, die Verwendung der beiden organischen Füllstoffe und die Kombination der beiden Härter der zweiten Komponente zu einer sehr guten Wetterbeständigkeit beispielsweise auf Faserzement. Anhand der nachfolgend dargestellten Tabellen soll ein Vergleich zur Acrylat-Beschichtung und zu typischen, marktgängigen 2K-PUR-Systemen gezeigt werden (Tab. 1) und der Einfluss der Bindemittelmischungen, der Härtermischung sowie die Verwendung organischer Füllstoffe auf die Alterungsbeständigkeit und dem Glanzgrad dargestellt werden (Tab. 2). Ebenso soll die Wichtigkeit der vollständigen Durchhärtung mittels Temperatureinwirkung aufgezeigt werden (Abb. 1 und Tab. 3).

**Tab. 1: Vergleich verschiedener Beschichtungstypen (alle Beispiele auf Anthrazit Platten)**

| Test | 2K-PUR der vorliegenden Erfindung | Typische Acrylat-Beschichtung für Faserzement | Antigraffiti-Beschichtung auf Basis wässrige 2K-PUR-System, typisches Marktbeispiel |
|---|---|---|---|
| Blocktest (RS-VS) | 0-1 | 5 | --- |
| (Verklebung der Oberflächen) | | (Oberfläche zerstört) | |
| Kratzfestigkeit | 1 | 4 | --- |
| Antigrafitti-Verhalten | 0-1 | 5 | 1 |
| Frost-/Tauzyklen (Haftung nach Abrisstest) | 0-1 | 0-1 | 5B |
| Feuchtigkeitstest (Haftung nach Abriss) | 0-1 | 0-1 | 3B |
| 1 Jahr Freibewitterung | 0 | 0 | 5B |
| (optische Beurteilung) | | | (nach 6 Monaten) |

| | | | |
|---|---|---|---|
| 0 = ausgezeichnet, 1 = sehr gut, 2 = gut, 3 = mässig, 4 = schlecht, 5 = sehr schlecht B = Blasenbildung RS-VS = Rückseite gegen Vorderseite | | | |

**Tab. 2: Vergleich verschiedener 2K-PUR Formulierungen**

| Substrat | alle 2K-PUR Formulierungen auf grundierte, Anthrazit-farbene Faserzementplatte getestet | | | |
|---|---|---|---|---|
| Formulierung | 1* | 2* | 3* | 4** |
| Bayhydrol XP-2695 (Bindemittel 1) | 42.8% | 29.8% | 28.8% | 28.5% |
| Bayhydrol XP-2427 (Bindemittel 2) | | 12.9% | 12.5% | 12.4% |
| Bayhydur 304 (Härter 1) | 9.9% | 9.9% | 4.8% | 4.8% |
| Desmondur N 3600 (Härter 2) | | | 4.8% | 4.8% |
| Plastorit P0000 (anorganischer Füllstoff) | 12.0% | 12.4% | 6.0% | 1.0% |
| Decosoft 15 (organischer Füllstoff) | | | 6.0% | 4.8% |
| Decosoft 18 (organischer Füllstoff) | | | | 4.8% |
| Glanzgrad 85° (nach ISO 2813) | 24.1% | 20.2% | 8.7+/-0.8% | 3.8+/-0.8% |
| ΔE nach 2000h QUV | - | 5.80 | 2.87 | 1.69 |
| ΔE nach 4000 QUV | - | - | 5.80 | 2.09 |
| Abriss 0-Probe | 0 | 1 | 0 | 0 |
| Warmwassertest | **3B** | **3B** | | 0 - 1 |
| Abriss nach Warmwassertest | 1 | 1 | 0 | 0 |
| Feuchtigkeitstest | **4V** | **3V** | 1 | 0 - 1 |
| Abriss nach Feuchtigkeitstest | 1 | 1 | 0 | 0 |
| Frosttest | **5B** | 2V | 1 | 0 - 1 |
| Abriss nach Frosttest | 1 | 1 | 0 | 0 |

| | | | | |
|---|---|---|---|---|
| * Vergleichsversuche ** Erfindungsgemässe Formulierung | | | | |

### Bewertungsskala:

0 = ausgezeichnet, 1 = sehr gut, 2 = gut, 3 = i.O., 4 = schlecht, 5 = sehr schlecht
V = Verfärbung, B = Blasenbildung

### Kommentar:

Alle Prüfungen wurden auf einer Anthrazit-durchgefärbten Faserzementplatte mit einer anthrazit-farbenen Lasur durchgeführt, da dieser Farbton besonders empfindlich auf Alterungsphänomene reagiert. Die Pigmentierung entspricht einem marktgängigen Farbton und ist sehr gering, so dass die Beschichtung transparent ist und damit das schlimmst mögliche Alterungsverhalten anzeigt.

Formulierung 1 enthält lediglich das hydrophile Reinacrylat als Bindemittel und einen hydrophilen Härter, sowie einen anorganischen Füllstoff. Mit dieser Formulierung erhält man Blasenbildung nach dem Warmwasser- und Frosttest sowie sehr starke Aufhellung im Feuchtigkeitstest (Bewertung: 5V).

In Formulierung 2 wurde ein Teil des hydrophileren Reinacrylat-Bindemittels durch das hydrophobere Styrolacrylat ersetzt. Somit verschwanden die Blasen im Frosttest.

In Formulierung 3 wurde zusätzlich die Hälfte des hydrophileren Härters Bayhydur 304 durch den hydrophoben Härter Desmodur N-3600 ersetzt, sowie die Hälfte des anorganischen Füllstoffes Plastorit durch den organischen Füllstoff Decosoft 15. Gegenüber Formulierung 2 verschwand somit die Blasenbildung im Warmwassertest und die Verfärbung im Feuchtigkeitstest. Zudem verbesserte sich die UV-Beständigkeit (tiefere Farbtonänderung ΔE) und der Glanzgrad reduzierte sich um mehr als die Hälfte.

Formulierung 4 schliesslich enthält wie erfindungsgemäss vorgeschlagen sowohl eine Mischung der beiden OH-funktionalisierten Polyacrylat-Bindemittel, die Mischung der beiden Isocyanat-Härter sowie eine Mischung der organischen Füllstoffe Decosoft 15 und Decosoft 18 mit unterschiedlicher mittlerer Teilchengrösse. Wie aufgabengemäss gefordert, weist die Beschichtung gemäss Formulierungsbeispiel 4 den tiefsten Glanzgrad, das heisst, eine möglichst matte Beschichtung auf sowie eine sehr gute Feuchtigkeits-, Warmwasser, Frost/Tau- und UV-Beständigkeit.

Die UV-Beständigkeit kann schliesslich durch Kombination der beiden Tinuvin-UV-Schutzmittel optimiert werden, was zu einem optimalen UV-Schutz gegen die schädlichen UV-Strahlungen führt, welche zu Trübungen der Beschichtungen und Schichtabbau führen kann.

Mit den folgenden Spektren und Tabelle soll die Wichtigkeit einer vollständigen Durchhärtung der 2K-PUR Beschichtung mittels Temperatureinwirkung gezeigt werden:
Abb. 1: Verfolgung der Vernetzungsreaktion über Messung der Isocyanat-Bande bei 2269 cm⁻¹ (Pfeil)

Der Pfeil zeigt die Isocyanat-Bande bei 2269 cm⁻¹ im erfindungsgemässen 2K-PUR Film, welcher auf Eternit Faserzement aufgetragen wurde. In beiden Spektrenreihen wurde die Isocyanatbande bei 2269 cm⁻¹ in regelmässigem zeitlichen Abständen zwischen 0h nach Auftrag (= oberste Messung) bis 14 Tage (= unterste Messung) verfolgt.

### Spektrum A: Vernetzungsreaktion nach 20 Minuten, 80°C, danach Lagerung bei Raumtemperatur

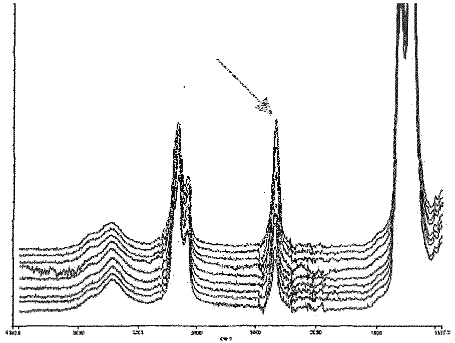

Die Isocyanat-Bande bei 2269 cm⁻¹ ist auch nach 14 Tagen (unterstes Spektrum) bei Raumtemperatur noch nicht vollständig abreagiert (gemessen mit einem ATR-FT-IR-Spektrometer 100 von Perkin Elmer).

### Spektrum B: Vernetzungsreaktion nach 100 Minuten, 80°C

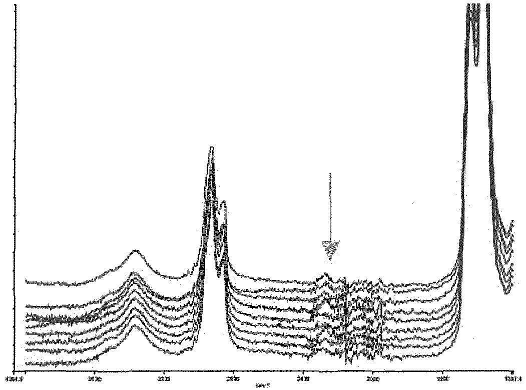

Die Isocyanatbande bei 2269 cm⁻¹ ist schon zum Zeitpunkt 0 (= oberstes Spektrum) nach 100 Minuten 80°C Durchhärtung vollständig abreagiert (gemessen mit einem ATR-FT-IR-Spektrometer 100 von Perkin Elmer).

**Tab. 3: Vergleich der Beständigkeiten der 2K-PUR Beschichtung nach unvollständiger und nach vollständiger Trocknung Unpigmentierte, vollständig transparente 2K-PUR Beschichtung auf anthrazit-farbenen Faserzementuntergrund**

| | 2K-PUR Beschichtung nach **unvollständiger** Trocknung (20 Minuten, 80°C) | 2K-PUR Beschichtung nach **vollständiger** Trocknung (100 Minuten, 80°C) |
|---|---|---|
| Abriss 0-Probe | 1 | 0 |
| Warmwassertest | 2V | 0 - 1 |
| Abriss nach Warmwassertest | 1 | 0 |
| Feuchtigkeitstest | 3V | 0 - 1 |
| Abriss nach Feuchtigkeitstest | 0 | 0 |
| Frosttest | 2V | 0 - 1 |
| Abriss nach Frosttest | 0 | 0 |
| ΔE nach 2000h QUV | 5.58 | 1. 69 |

### Bewertungsskala:

0 = ausgezeichnet, 1 = sehr gut, 2 = gut, 3 = i.O., 4 = schlecht, 5 = sehr schlecht
V = Verfärbung

### Kommentar:

Der unvollständig durchgehärtete 2K-PUR Film zeigt deutliche Verfärbungen/Aufhellungen (V) im Warmwasser-, Feuchtigkeits- und Frosttest, was der vollständig durchgehärtete Film nicht zeigt. Zudem ist im QUV-Test, welcher die Alterung durch UV-Einstrahlung aufzeigt, die Aufhellung mit ΔE nach 2000h von 5.58 unakzeptabel hoch, während der vollständig durchgehärtete Film mit einem ΔE von 1.69 eine sehr gute Beständigkeit aufweist.

### Beispiel eines Applikationsprozesses:

Folgender Prozess wurde auf einer Faserzement Rohplatte der Firma Eternit, Niederurnen, Schweiz durchgeführt, welche vorgängig mit einem hydrophobierendem Silan mittels Kalanderauftrag hydrophobiert wurde:
In einem ersten Schritt wird mittels eines Kalanders eine 20-30 g/m² einer Grundierung, bestehend aus einer Reinacrylat-Dispersion, auf die Faserzementplatte aufgebracht. Anschliessend wird die Faserzementplatte auf 40-50°C Oberflächentemperatur aufgewärmt und somit die Grundierung getrocknet. Auf die noch auf gleicher Temperatur aufgewärmte Platte wird auf der Rückseite die Rückseitenbeschichtung bestehend aus einer Mischung von Wachsdispersionen mit einer Nassfilmauftragsmenge von 25-40g/m2 ebenfalls mittels eines Kalanders aufgetragen. Nach 1-5 Minuten Trockenzeit bei ca. 30°-70°C wird mittels einer Dosier- und Mischanlage, welche drei Komponenten (Lasur = Komponente A, Härter = Komponente B und Wasser zwecks Verdünnung = Komponente C) der erfindungsgemässen 2K-PUR Zusammensetzung in einem definierten Mischverhältnis dosiert und über zwei Statikmischer homogen gemischt. Die wässrige 2K-PUR Beschichtung wird über Spritzpistolen aufgesprüht. Das Mischverhältnis der Komponenten A, enthaltend Bindemittel, Füllstoff und Additive und B, enthaltend die Härtermischung beträgt je nach Farbfamilie A : B = 4 : 1 bis zu 8 : 1, bevorzugt 6 : 1. Das Gemisch bestehend aus A und B wird anschliessend gegebenenfalls mit Wasser zu 25% verdünnt. Die Nassfilmdicke beträgt 140-220g/m2. Nach 5 Minuten Trocknungszeit wird der Film ca. 2 Minuten auf 60°C erwärmt, um eine Verfilmung zu erreichen und anschliessend 100 bis 140 Minuten bei 65 - 85°C durchgehärtet. ATR FT-IR Aufnahmen des derart gehärteten Films zeigen, dass die Isocyanat-Bande bei 2269 cm-1 verschwunden ist und damit der 2K-PUR Film tatsächlich vollständig durchgehärtet ist (Abb. 1). Die Platte ist damit fertig und im Auslieferungszustand.

Der Glanzgrad der durchgehärteten Beschichtung gemessen mit einem Glanzgradmessgerät bei einem Messwinkel von 85° beträgt weniger als 10% (DIN/EN13300).

Die Wetterbeständigkeit wurde mittels folgender Tests ermittelt: einerseits über einen intern definierten Test auf Frost/Tauzyklen (Prüflinge liegend mit Sichtseite nach oben geprüft: Einfrieren in ca. 10 Min., 50 Min. bei -25°C gehalten und danach innerhalb 10 Min. mittels Wasserfüllung aufgetaut und anschliessend 50 Min. mit Wasser bei Raumtemperatur gewässert; vor nächstem Frostzyklus wird das Wasser wieder abgelassen; Prüfdauer: 36 Zyklen), QUV-Test (8h Bestrahlung mit 1.15 Watt/m2 bei 60+/-3°C, 4h Betauung bei 60+/-3°C, Dauer: 4000h), 4000h Xenonprüfung in Anlehnung an ASTM ASTM G 26 - 70, DIN 53387, Feuchtigkeitstest in Anlehnung an ASTM 2366 (4 Tage 60°C in der Dampfphase oberhalb eines Dampfbades von 65°C, bewertet nach anschliessendem Trocknen) und eines Warmwassertests (Einlegen von Prüfling 4 Tage lang in 40°C warmen Wasser).

Nach den Prüfungen werden die Prüflinge über Nacht bei 80+/-10°C rückgetrocknet und danach einerseits das optische Erscheinungsbild im Vergleich zu einer Referenz beurteilt (farbliche Änderungen, Flecken, Trübungen, Ausblühungen, Blasen, Erosion, Kreidung, Abplatzungen, Risse, usw.), andererseits die Haftung. Die Haftung wird geprüft, indem ein Abrisstest mittels eines Klebebands (Tesaband Nr. 4651, Firma Beiersdorf) durchgeführt wird.

Bei den vorab beschriebenen Beispielen und erfindungsgemässen Angaben handelt es sich selbstverständlich um Beispiele für das bessere Verständnis der vorliegenden Erfindung. Die Erfindung ist keinesfalls auf die in den beispielsweise erwähnten Rezepturen beschränkt, und irgendwelche geeignete OH-funktionalisierte Bindemittel wie insbesondere die erwähnten Polyacrylate und Styrolacrylate sowie aliphatische Isocyanat-Härter sind geeignete Bindemittelkomponenten. Auch sind die vorgeschlagenen Rezepturen nebst den erwähnten Faserzementplatten geeignet für die Beschichtung von Beton, zementgebundene Baumaterialien aller Art mit oder ohne Faserverstärkung, Cement composites, Ton, Holz etc. bzw. für die Beschichtung von einem mindestens teilweise aus mineralischen Materialien bestehenden Untergrund. Gemäss der vorliegenden Erfindung wird insbesondere vorgeschlagen, nebst den erwähnten Bindemittel zusätzlich mindestens einen Füllstoffen auf organischer Basis, wie Polyurethane oder Polymethylmethacrylate zu verwenden.

## Patentansprüche

1. Zusammensetzung für die Beschichtung von einem mindestens teilweise aus mineralischen Materialien bestehenden Untergrund, enthaltend eine mindestens zwei Komponenten aufweisende Formulierung, **gekennzeichnet durch**
- eine erste Komponente auf Basis mindestens eines OH-funktionaliesierten Bindemittels, umfassend mindestens ein Polyacrylat mit Styrolgehalt ≤ 30%,
- eine zweite Komponente enthaltend eine Härterkomponente die als Mischung von Härtern mindestens eines aliphatischen Isocyanats oder eines Polymers davon vorliegt, wobei ein Härter hydrophil und ein weiterer Härter hydrophob ist, und
- mindestens-zwei Füllstoffe auf Basis von Polyurethanen und/oder Polymethylmethacrylat vorliegen mit unterschiedlicher mittlerer Teilchengrössen von 10-20µm sowie 15-25µm.

2. Zusammensetzung nach Anspruch 1, **dadurch gekennzeichnet, dass** die erste Komponente als Dispersion mindestens eines Polyacrylats und/oder Styrolacrylat und/oder Mischungen davon vorliegt.

3. Zusammensetzung nach einem der Ansprüche 1 oder 2, **dadurch gekennzeichnet, dass** in der ersten Komponente Abmischungen von Polyacrylat vorliegen, wobei eine Komponente eine Styrolgehalt von ≤ 30% aufweist und mindestens eine zweite Komponente mit einem geringeren Styrolgehalt von ≤ 5% und/oder ein OH-funktionalisiertes Reinacrylat ist.

4. Zusammensetzung nach einem der Ansprüche 1 bis 3, **dadurch gekennzeichnet, dass** die erste Komponente nebst dem Bindemittel und Pigmenten weitere Rohstoffe und Hilfsstoffe enthält, ausgewählt aus der Liste von:
Füllstoffe, Netz- und Dispergieradditive, Emulgatoren, Rheologieadditive, Benetzungs- und Verlaufsadditive, Entschäumer, Topf- und Filmkonservierer, Wachsdispersionen, Hydrophobierungsmittel, Biozide, UV-Schutzmittel, Fasern, Lösemittel, Filmbildehilfsmittel und anderen Rohstoffen sowie Mischungen davon.

5. Zusammensetzung nach einem der Ansprüche 1 bis 4, **dadurch gekennzeichnet, dass** weiter ein anorganischer Füllstoff vorliegt.

6. Zusammensetzung nach einem der Ansprüche 1 bis 5, **dadurch gekennzeichnet, dass** UV-Absorber auf Basis von Triacin vorliegen.

7. Zusammensetzung nach einem der Ansprüche 1 bis 6, **dadurch gekennzeichnet, dass** die zweite Komponente der Formulierung als Härterkomponente Oligomere/ Polymere der Monomeren aliphatischer Isocyanate, wie Hexamethylendiisocyanate und/oder Oligomere/ Polymere aus Isophorondiisocyanaten enthält, welche gegebenenfalls mittels Ethylenoxid und/oder Propylenoxid und/oder 3-(Cyclohexylamino-1-propan-sulfonsäure modifiziert sind.

8. Zusammensetzung nach einem der Ansprüche 1 bis 7, **dadurch gekennzeichnet, dass** als Härterkomponente mindestens ein aliphatischer Härter auf Basis von Hexamethylendiisocyanat und/oder einem modifizierten Hexamethylendiisocyanat ist.

9. Zusammensetzung nach einem der Ansprüche 1 bis 8, **dadurch gekennzeichnet, dass** der Isocyanatgehalt der Härter zwischen 10-40% wie 5-25% beträgt.

10. Zusammensetzung nach einem der Ansprüche 8 bis 9, **dadurch gekennzeichnet, dass** das Verhältnis von erster Bindemittelkomponente der Formulierung zur Härterkomponente im molaren Verhältnis von [OH] zu [NCO] = 1 : 1 bis 1 : 5 beträgt, wie beispielsweise 1 : 1,5.

11. Verfahren zur Herstellung einer Zusammensetzung für die Beschichtung von einem mindestens teilweise aus mineralischen Materialien bestehenden Untergrund, enthaltend eine mindestens zwei Komponenten aufweisende Formulierung, **dadurch gekennzeichnet, dass** die erste, wie in Anspruch 1 genannte Komponente auf Basis mindestens eines OH-funktionalisierten Bindemittels sowie die zweite, wie in Anspruch 1 genannte Komponente enthaltend mindestens ein aliphatisches Isocyanat oder ein Oligomer oder ein Polymer davon im molaren Verhältnis von [OH] zu [NCO] im Verhältnis 1 : 1 bis 1 : 5 miteinander gemischt werden, wobei vor oder beim Mischen der beiden Komponenten mindestens eine Mischung aus Füllstoffen auf organischer Basis, umfassend Polyurethane oder Polymethylmethacrylat zudosiert bzw. beigemischt wird, welche Füllstoffe unterschiedliche, wie in Anspruch 1 genannte Teilchengrössen aufweisen.

12. Verfahren nach Anspruch 11, **dadurch gekennzeichnet, dass** als erste Komponente eine Dispersion einer Mischung von einem Polyacrylat mit einem Styrolgehalt von ≤ 30% mit einem weiteren Polyacrylat mit einem geringeren Styrolgehalt von ≤ 5% und/oder einem OH-funktionalisierten Reinacrylat mit einer Mischung von mindestens zwei aliphatischen Isocyanathärtern gemischt wird, wobei mindestens ein Härter hydrophil ist und ein weiterer Härter hydrophob und dass zusätzlich der ersten Komponente Füllstoffe auf organischer Basis, umfassend Polyurethan oder Polymethylmethacrylate zudosiert werden, welche Füllstoffe unterschiedliche Teilgrössen aufweisen, sowie als UV-Absorber Additive auf Basis von Triazin.

13. Verfahren nach einem der Ansprüche 11 oder 12, **dadurch gekennzeichnet, dass** das Mischen der Komponenten mittels automatisiertem Misch- und Dosierverfahren erfolgt.

14. Verfahren zum Beschichten eines mineralischen Untergrundes unter Verwendung einer Zusammensetzung nach einem der Ansprüche 1 bis 10, **dadurch gekennzeichnet, dass** der mineralische Untergrund vor dem Beschichten mittels einer Grundierung hydrophobiert wird.

15. Verfahren nach Anspruch 14 **dadurch gekennzeichnet, dass** der mineralische Untergrund vor der Applikation bzw. dem Beschichten der Zusammensetzung erwärmt wird, auf eine Oberflächentemperatur von 25° bis 80° Celsius, vorzugsweise 40° bis 50° Celsius.

16. Verfahren nach Anspruch 14 oder 15, **dadurch gekennzeichnet, dass** die Beschichtung nach der Applikation auf den mineralischen Untergrund für eine vollständige Reaktion der Komponenten während mindestens vorzugsweise 100 Minuten in einem Temperaturbereich von 65° bis 85° Celsius Temperatur behandelt wird.

## Claims

1. Composition for coating a substrate consisting at least partially of mineral materials, comprising a formulation comprising at least two components, **characterized by**
- a first component based on at least one OH-functionalized binder comprising at least one polyacrylate containing styrene ≤ 30%,
- a second component comprising a hardener component present as a mixture of hardeners of at least one aliphatic isocyanate or a polymer thereof, one hardener being hydrophilic and another hardener being hydrophobic, and
- at least two fillers based on polyurethanes and/or polymethyl methacrylate are present with different average particle sizes of 10-20µm and 15-25µm.

2. Composition according to claim 1, **characterized in that** the first component is present as a dispersion of at least one polyacrylate and/or styrene acrylate and/or mixtures thereof.

3. Composition according to one of claims 1 or 2, **characterized in that** mixtures of polyacrylate are present in the first component, one component having a styrene content of ≤ 30% and at least one second component having a lower styrene content of ≤ 5% and/or being an OH-functionalized pure acrylate.

4. Composition according to one of claims 1 to 3, **characterized in that** the first component contains, in addition to the binder and pigments, further raw materials and auxiliaries selected from the list of:
Fillers, wetting and dispersing additives, emulsifiers, rheological additives, wetting and levelling additives, defoamers, pot and film preservatives, wax dispersions, hydrophobing agents, biocides, UV protection agents, fibres, solvents, film-forming aids and other raw materials and mixtures thereof.

5. Composition according to any one of claims 1 to 4, **characterized in that** an inorganic filler is further present.

6. Composition according to any one of claims 1 to 5, **characterized in that** UV absorbers based on triacin are present.

7. Composition according to one of claims 1 to 6, **characterized in that** the second component of the formulation contains as hardener component oligomers/polymers of the monomers of aliphatic isocyanates, such as hexamethylene diisocyanates and/or oligomers/polymers of isophorone diisocyanates, which are optionally modified by means of ethylene oxide and/or propylene oxide and/or 3-(cyclohexylamino-1-propane sulfonic acid).

8. Composition according to any one of claims 1 to 7, **characterized in that** the hardener component is at least one aliphatic hardener based on hexamethylene diisocyanate and/or a modified hexamethylene diisocyanate.

9. Composition according to any one of claims 1 to 8, **characterized in that** the isocyanate content of the hardeners is between 10-40% and 5-25%.

10. Composition according to any one of claims 8 to 9, **characterized in that** the ratio of the first binder component of the formulation to the hardener component in the molar ratio of [OH] to [NCO] = 1:1 to 1:5, such as 1:1.5.

11. Process for the production of a composition for coating a substrate consisting at least partially of mineral materials, comprising a formulation having at least two components, **characterized in that** the first component, as mentioned in claim 1, is based on at least one OH-functionalized binder and the second component, as mentioned in claim 1, comprises at least one aliphatic isocyanate or an oligomer or a polymer thereof in a molar ratio of [OH] to [NCO] in the ratio of 1:1 to 1:5, wherein, before or during mixing of the two components, at least one mixture of organic-based fillers comprising polyurethanes or polymethyl methacrylate is metered in or, as the case may be, mixed with one another in a molar ratio of [OH] to [NCO] in a ratio of 1:1 to 1:5, is added or admixed, which fillers have different particle sizes as mentioned in claim 1.

12. Process according to claim 11, **characterized in that** a dispersion of a mixture of a polyacrylate with a styrene content of ≤ 30% with a further polyacrylate with a lower styrene content of ≤ 5% and/or an OH-functionalized pure acrylate is mixed as the first component with a mixture of at least two aliphatic isocyanate hardeners, wherein at least one curing agent is hydrophilic and another curing agent is hydrophobic, and that in addition to the first component fillers on an organic basis comprising polyurethane or polymethyl methacrylates are added, which fillers have different particel sizes, and as UV absorbers additives based on triazine.

13. process according to one of claims 11 or 12, **characterized in that** the mixing of the components is carried out by means of an automated mixing and metering process.

14. a method of coating a mineral substrate using a composition according to any one of claims 1 to 10, **characterised in that** the mineral substrate is hydrophobised by means of a primer before coating.

15. Process according to claim 14, **characterized in that** before application or coating of the composition, the mineral substrate is heated to a surface temperature of 25° to 80° degrees, preferably 40° to 50° degrees.

16. Process according to claim 14 or 15, **characterized in that** the coating is treated after application to the mineral substrate for a complete reaction of the components for at least preferably 100 minutes in a temperature range of 65° to 85° degrees temperature.

## Revendications

1. Composition pour le revêtement d'un support composé au moins partiellement de matières minérales, contenant une formulation présentant au moins deux composants, **caractérisée par**
- un premier composant à base d'au moins un liant à fonction OH, comprenant au moins un polyacrylate avec une teneur en styrène ≤ 30 %,
- un deuxième composant contenant un composant durcisseur sous la forme d'un mélange de durcisseurs d'au moins un isocyanate aliphatique ou d'un polymère, un durcisseur étant hydrophile et l'autre durcisseur étant hydrophobe, et
- au moins deux matières de charge à base de polyuréthanes et/ou de polyméthylméthacrylate avec des tailles moyennes de particules différentes de 10-20 µm et 15-25 µm.

2. Composition selon la revendication 1, **caractérisée en ce que** le premier composant est présent sous la forme d'une dispersion d'au moins un polyacrylate et/ou de styrolacrylate et/ou de mélanges de ces derniers.

3. Composition selon l'une des revendications 1 ou 2, **caractérisée en ce qu'**il y a dans le premier composant des mélanges de polyacrylate, un composant présentant une teneur en styrène de ≤ 30 %, et au moins un deuxième composant ayant une teneur en styrène moindre de ≤ 5 % et/ou étant un acrylate pur à fonction OH.

4. Composition selon l'une des revendications 1 à 3, **caractérisée en ce que** le premier composant contient, en plus du liant et des pigments, d'autres matières premières et excipients, choisis à partir de la liste comprenant :
des matières de charge, des additifs de réticulation et de dispersion, des émulsifiants, des additifs rhéologiques, des additifs de mouillage et nivelants, des agents antimoussants, des agents de conservation, des dispersions de cire, des agents hydrophobisants, des biocides, des agents anti-UV, des fibres, des solvants, des produits auxiliaires filmogènes et autres matières premières ainsi que des mélanges de ces derniers.

5. Composition selon l'une des revendications 1 à 4, **caractérisée en ce qu'**il y a également une matière de charge inorganique.

6. Composition selon l'une des revendications 1 à 5, **caractérisée en ce que** les agents absorbant les UV sont présents à base de triacine.

7. Composition selon l'une des revendications 1 à 6, **caractérisée en ce que** le deuxième composant de la formulation comme composant durcisseur contient des oligomères/polymères des monomères d'isocyanate aliphatique, comme de l'hexaméthylène-diisocyanate et/ou des oligomères/polymères de diisocyanates d'isophorone, lesquels le cas échéant sont modifiés à l'aide d'oxyde d'éthylène et/ou d'oxyde de propylène et/ou d'un acide 3-(cyclohexylamino)-1-propan-sulfonique.

8. Composition selon l'une des revendications 1 à 7, **caractérisée en ce que** le composant durcisseur est au moins un durcisseur aliphatique à base d'hexaméthylène-diisocyanate et/ou d'un hexaméthylène-diisocyanate modifié.

9. Composition selon l'une des revendications 1 à 8, **caractérisée en ce que** la teneur en isocyanate des durcisseurs est comprise entre 10-40 % et 5-25 %.

10. Composition selon l'une des revendications 8 à 9, **caractérisée en ce que** le rapport entre le premier composant liant de la formulation et le composant durcisseur en rapport molaire de [OH] sur [NCO] est de 1:1 à 1:5, comme par exemple 1:1,5.

11. Procédé pour fabriquer une composition pour le revêtement d'un support composé au moins partiellement de matières minérales, contenant une formulation présentant au moins deux composants, **caractérisé en ce que** le premier composant, tel qu'indiqué à la revendication 1, est un composant à base d'au moins un liant à fonction OH et le deuxième composant, tel qu'indiqué à la revendication 1, est un composant contenant au moins un isocyanate aliphatique ou un oligomère ou un polymère de ce dernier mélangés ensemble selon un rapport molaire de [OH] sur [NCO] de 1:1 à 1:5, dans lequel avant ou lors du mélange des deux composants il est ajouté ou mélangé au moins un mélange de matières de charge de base organique, comprenant du polyuréthane ou du polyméthylméthacrylate, lesquelles matières de charge présentant des tailles de particules différentes telles qu'indiquées à la revendication 1.

12. Procédé selon la revendication 11, **caractérisé en ce que** le premier composant est une dispersion d'un mélange d'un polyacrylate d'une teneur en styrène de ≤ 30 % avec un autre polyacrylate d'une teneur en styrène moindre de ≤ 5 % et/ou d'un acrylate pur à fonction OH avec un mélange d'au moins deux durcisseurs isocyanate aliphatiques, au moins un durcisseur étant hydrophile et l'autre durcisseur étant hydrophobe, et **en ce qu'**il est ajouté, en plus du premier composant, des matières de charge à base organique comprenant du polyuréthane ou du polyméthylméthacrylate, les matières de charge présentent des tailles de particules différentes, ainsi que des absorbants UV sous forme d'additifs à base de triacine.

13. Procédé selon l'une des revendications 11 ou 12, **caractérisé en ce que** le mélange des composants se fait par le biais d'un procédé de mélange et de dosage automatisé.

14. Procédé pour revêtir un support minéral en utilisant une composition selon l'une des revendications 1 à 10, **caractérisé en ce que** le support minéral est rendu hydrophobe avant le revêtement par le biais d'une couche d'apprêt.

15. Procédé selon la revendication 14, **caractérisé en ce que** le support minéral est chauffé avant l'application de la composition ou le revêtement à une température de surface de 25° à 80° Celsius, de préférence de 40° à 50° Celsius.

16. Procédé selon la revendication 14 ou 15, **caractérisé en ce que** le revêtement est traité après l'application sur le support minéral pour une réaction complète des composants pendant au moins de préférence 100 minutes dans une plage de température comprise entre 65° et 85° Celsius.
